# EUROPEAN PATENT SPECIFICATION

(11) **EP 2 578 447 B1**
(45) Date of publication and mention of the grant of the patent: **30.11.2016**
(21) Application number: 11184153.2
(22) Date of filing: 06.10.2011
(51) Int. Cl.: B60N 2/64, B60N 2/01, B60N 2/24, B60N 3/02, B60N 2/46

(54) **Retaining device for passenger transport vehicle and passenger transport vehicle comprising such a device**
Rückhaltevorrichtung für Passagiertransportfahrzeuge und Passagiertransportfahrzeug mit einer solchen Vorrichtung
Dispositif de rétention pour véhicule de transport de passagers et véhicule de transport de passagers comportant un tel dispositif

(43) Date of publication of application: 10.04.2013
(73) Proprietor: Iveco France S.A., 69200 Vénissieux (FR)
(72) Inventor: Sauvaget, Thierry, 69780 Toussieu (FR)
(74) Representative: Franzolin, Luigi

(56) References cited:
- FR-A1- 2 799 423
- JP-A- 11 152 870
- US-A- 2 450 093

## Description

The present invention relates to a retaining device for passenger transport vehicle passengers, of the type comprising a support column intended to allow the vehicle's passengers to stabilize themselves, said column comprising an upper end portion, a central portion comprising at least one tubular support bar, adapted to be grasped by a user, and a lower end portion.

Passenger transport vehicle refers to any rolling vehicle including a passenger compartment intended to transport passengers, for example a bus, trolley bus, tramway, train or subway car. This type of vehicle generally comprises columns that are distributed in the passenger compartment and that most often extend from the floor to the ceiling of said passenger compartment. Said columns are intended to allow standing passengers of the vehicle to stabilize themselves, in particular when the vehicle is in motion.

This column thus extends between an upper end for fixing to the roof of the vehicle, and a lower end for fixing to the floor of the vehicle. The floor and the roof of the vehicle must be adapted to receive such fastenings, such that the inner arrangement of the vehicle depends on the location of the fixing zones provided on the floor and the roof. The modification of this arrangement thus requires a modification of the floor and the roof, which is difficult to implement.

Furthermore, the upper and lower portions of the column are bulky, whereas only an intermediate portion of said column can be held by a passenger. In fact, the fastening points for fixing the column on the floor and the roof hinder the space made available to passengers. In particular, the fastening points for fixing the column on the floor occupy a space that could have received luggage or wheelchairs for handicapped people. Furthermore, they constitute bothersome obstacles during cleaning of the vehicle.

To offset this drawback, it is known to fasten the lower portion of the column to a seat of the vehicle. However, the upper portion of the column remains fastened to the roof. Said upper portion, though, which only serves to anchor the column to the roof, constitutes a visual obstacle accentuating the impression of confinement in the vehicle. An example of such column is disclosed in FR 2799423 A1.

The present invention aims in particular to resolve these drawbacks by proposing a retaining device with a small bulk and that can be positioned independently of the structure of the floor and roof of the vehicle.

To that end, the invention relates to a retaining device comprising the features of claim 1.

The device according to the invention can comprise the features according to claims 2 to 6.

The invention also relates to a passenger transport vehicle comprising at least one seat and at least one device according to the invention.

The invention will be better understood in light of the following description, provided only as an example, and done in reference to the appended drawings, in which:
Figure 1 is a perspective view of the structure of a pair of seats supporting a support column according to one embodiment of the invention;
Figure 2 is a semi-exploded perspective view of the pair of seats of Figure 1;
Figure 3 is an exploded perspective view of the pair of seats of Figure 1;
Figure 4 is a perspective view of the pair of seats of

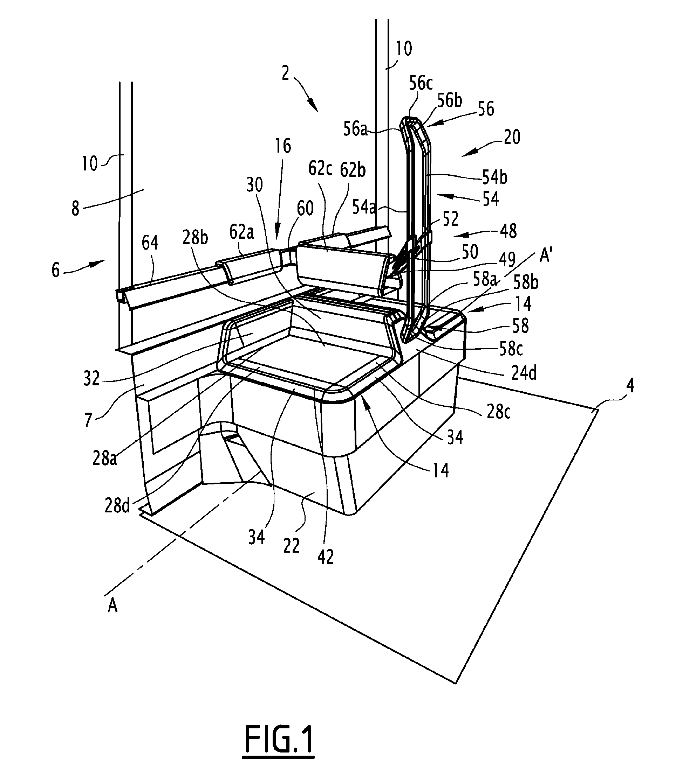

Figure 1 with a passenger seated in a first seated position; and

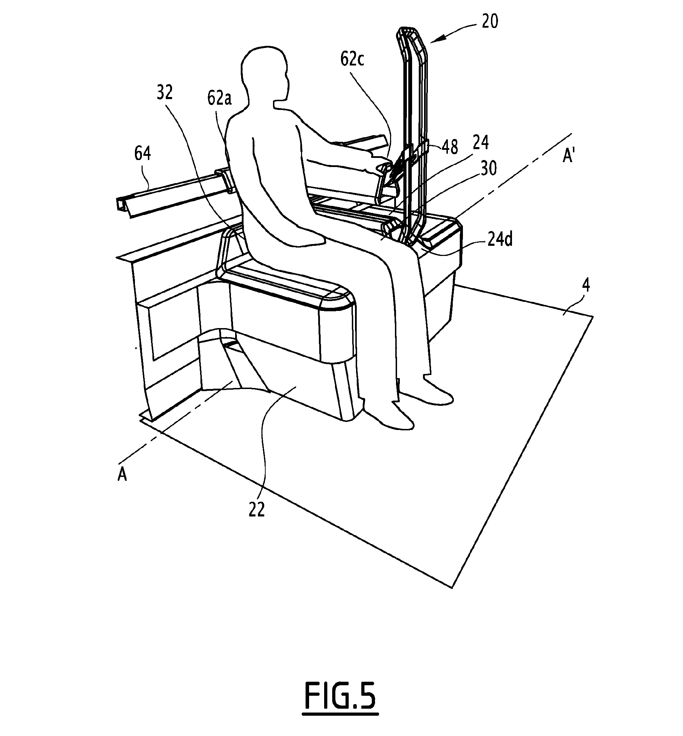

Figure 5 is a perspective view of the pair of seats of

Figure 1 with a passenger seated in a second seated position.

Hereafter, the chosen orientations are provided for information and are to be understood relative to the figures. In particular, the terms "upper," "lower," "top" and "bottom" are to be understood relative to the orientation selected in the Figures. These terms are used relative to the orientation of the seats mounted on the chassis frame of the passenger transport vehicle.

Furthermore, the terms "transverse" and "longitudinal" must be understood in relation to the longitudinal axis A-A', which is the travel axis of the passenger transport vehicle.

Figures 1 to 5 illustrate a pair 2 of seats supporting a support column according to the invention, placed in a passenger transport vehicle, for example a bus.

Figures 1 to 5 show certain parts of the vehicle structure, i.e. the floor 4 of the vehicle, a side wall 6 comprising a panel 7 topped with a picture window 8, and two vertical posts 10. The two vertical posts 10 rise along the side wall 6 inside the vehicle, from the floor 4 to the ceiling, not shown, of the vehicle.

The pair 2 of seats rests on the floor 4. It is adjacent to the side wall 6, between the two posts 10. It comprises two seats 12, 12' defining two seating zones symmetrical relative to a middle transverse vertical plane hereafter called middle plane.

The pair 2 of seats comprises two seat portions 14, lateral support elements 16 for the passenger's body, a support structure for the seat portions 14, a support structure for the support elements 16 and a support column 20.

The support structure for the seat portions comprises a support box 22 for the seat portions. The box 22 is substantially parallelepiped. It extends transversely between a first lateral edge adjacent to the side wall 6 and a second lateral edge adjacent to an aisle of the vehicle.

The box 22 is for example hollow, and can be placed above a wheel of the passenger transport vehicle.

The box 22 comprises, on its upper surface, a transverse protrusion 24 for supporting part of a passenger's body and fixing the column 20.

The protrusion 24 extends between the lateral edges of the box 22, at mid-length of the box 22. It has a prismatic shape with a trapezoidal base. It thus comprises two side surfaces 24a, 24b and a horizontal upper surface 24c.

The side surfaces 24a, 24b are bearing planes for the bottom of a passenger's back. They are tilted upward and toward the middle plane. Their upper edges are connected by the upper wall 24c.

The protrusion 24 also comprises, at its end adjacent to the aisle of the vehicle, a tilted surface 24d. The tilted surface 24d is a support and fastening surface for the column 20. It is tilted upward and toward the inside of the seats 12, 12'.

The box 22 comprises, on either side of the protrusion 24, two horizontal support surfaces 26, 26' for a seat portion 14, substantially rectangular, for example square. These two support surfaces 26, 26' are symmetrical relative to the middle plane.

The seat portions 14 are symmetrical relative to the middle plane.

Each seat portion 14 rests on a support surface 26, 26' of the box 22. As shown in particular in Figure 1, it comprises a seat portion part 28, and two support elements, central 30 and side 32, respectively, for the bottom of a passenger's back. The support elements 30, 32 protrude from two adjacent edges 28a, 28b of the seat portion part 28 that are perpendicular to each other. These two edges 28a, 28b, called rear edges, are adjacent to the protrusion 24 and the wall 6 of the vehicle, respectively. Each seat portion 14 also comprises two front rims 34 protruding from the other two edges 28c, 28d, called front edges, of the seat portion part 28.

The seat portion part 28 comprises an upper surface intended to receive, by vertical bearing, part of the passenger's body. It has a shape substantially identical to a support surface 26, 26' of the box 22. The upper surface of the seat portion part 28 is thus substantially rectangular, for example square. The seat portion part 28 has a length and width adapted to receive a passenger in the seated position. The length and width of the seat portion part 28 are for example between 30 and 50 cm.

The lower surface of the seat portion part 28 has a shape substantially combined with the support surface 26, 26' of the box 22. The seat portion part 28 can thus bear against the box 22 by their surfaces.

The central support element 30 extends upward and toward the middle plane P from the rear edge 28b of the seat portion part 28 adjacent to the protrusion 24. Its lower surface has a shape substantially combined with a side wall 24a, 24b of the protrusion 24. The central support element 30 can thus bear against the protrusion 24 by their surfaces.

The side support element 32 extends upward and toward the side wall 6 of the vehicle from the rear edge 28a of the seat portion part 28 adjacent to the side wall 6.

The two front rims 34 are rounded ergonomic rims that can receive, by bearing, the rear surface of the passenger's knees. They are curved downward from the two front edges 28c, 28d of the seat portion part.

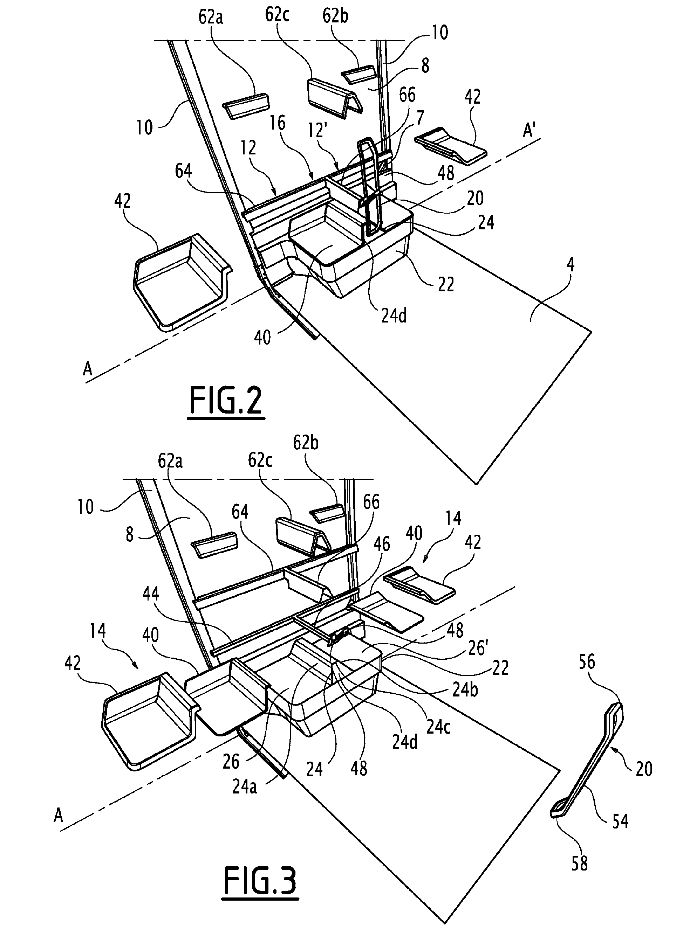

As shown in Figures 2 and 3, each seat portion 14 comprises a dressing 40 and a covering 42, with combined shapes. The dressing 40 rests on the support surface 26, 26' of the box 22. It is for example made from a wood-based material.

The covering 42, intended to improve the comfort of the seat portion, covers the dressing 40. The covering 42 for example comprises foam trim covered with a fabric.

The support structure for the support elements 16 is shared by the two seats 12, 12'. It comprises two horizontal support runners 44, 46, perpendicular to each other, visible in Figure 3.

A first longitudinal runner 44 is fixed to the two posts 10 inside the vehicle, above the box 22, at the picture window 8. The longitudinal runner 44 is for example welded to the two posts 10.

A second transverse runner 46 protrudes perpendicularly to the longitudinal runner 44 overhanging the protrusion 24. It is fixed, at one of its ends, to the longitudinal runner 44, substantially at mid-length thereof, and at its free end to a support member 48 of the column 20.

The runners 44, 46 are for example made from profiled steel.

The support member 48 is generally Y-shaped. It comprises means for fastening to the transverse runner 46 and support means for the column 20.

The support member 48 thus comprises a horizontal lug 49, fixed at one of its ends to the free end of the transverse runner 46, and extended at its second end by two oblique lugs 50, 52. The oblique lugs 50, 52 are symmetrical relative to the middle plane P. They protrude from the horizontal lug 49 upward and toward the aisle of the vehicle, in two directions oblique to the middle plane P, symmetrical relative to said plane. Each oblique lug 50, 52 comprises, at its upper end, a support element for the column 20, for example a vertical tubular opening.

The column 20 is intended to allow standing passengers to stabilize themselves when the vehicle is in motion.

The column 20 comprises a central portion 54, which passengers can hold, an upper end portion 56, and a lower end portion 58, which is intended to fix the column 20 on the seat 12, 12'.

The column 20 is a double column, symmetrical relative to the middle plane P. Its central portion 54 thus comprises two parallel support bars 54a, 54b, which are substantially vertical. The bars 54a, 54b are tubular, with a substantially circular or polygonal horizontal section. Their maximum diameter or transverse dimension is for example between 30 mm and 40 mm. The outer surface of each bar 54a, 54b has a shape combined with the inner surface of the tubular opening of the oblique lug 50, 52.

Each of the bars 54a, 54b can be grasped by at least one passenger so he can stabilize himself.

The upper 56 and lower 58 end portions of the column 20 are symmetrical relative to a middle horizontal plane. The lower end portion 58 comprises two oblique portions 58a, 58b protruding from the lower ends of the bars 54a, 54b, downward and toward the wall 24d of the protrusion 24, connected by a horizontal lower portion 58c.

Symmetrically, the upper end portion 56 comprises two oblique portions 56a, 56b protruding from the upper ends of the bars 54a, 54b, upward and toward the wall 6 of the vehicle, connected by a horizontal upper portion 56c.

The column 20 therefore forms a closed loop, the bars 54a, 54b being connected to each other by the upper 56 and lower 58 end portions. The separation between the bars 54a and 54b is substantially equal to the distance between the tubular openings of the support element.

The column 20 can be made from stainless steel or painted steel.

The lower end portion 58 bears against the box 22, more specifically against the tilted surface 24d of the protrusion 24. The lower end portion 58 is fixed to said tilted surface 24d, for example using screws.

Furthermore, each of the bars 54a, 54b is maintained, substantially at the middle thereof, by the support member 48. In the illustrated embodiment, each bar 54a, 54b is mounted in a tubular opening of an oblique lug 50, 52. The outer surface of each bar then bears by its surface against the inner surface of a tubular opening. The column 20 is thus maintained in the lower end portion thereof and in an intermediate portion, for example in its middle, by support means incorporated into the seat 12, 12'.

The lateral support elements 16 comprise a dressing and coverings 62a, 62b, 62c. The lateral support elements 16 can receive, by bearing, part of a passenger's body, for example his back or one of his arms.

The dressing covers the runners 44, 46 and supports the coverings 62a, 62b, 62c. It comprises two horizontal cornices 64, 66, perpendicular to each other.

A first longitudinal cornice 64 covers the longitudinal runner 44. It has a length substantially equal to the length of the longitudinal runner 44. Its transverse section is in the shape of an inverted L.

A second transverse cornice 66 protrudes perpendicularly to the longitudinal cornice 64. Its length is substantially equal to the length of the transverse runner 46. It has a transverse section in the shape of an inverted V with a flat bottom. The transverse cornice 66 thus comprises a horizontal upper wall fixed at one of its ends to the longitudinal cornice 46 and two tilted side walls extending downward from the upper wall. The transverse cornice 66 thus covers the transverse runner 46.

The coverings 62a, 62b, 62c are comfort elements of the seat. They partially cover the dressing. They comprise a central covering 62c and two side coverings 62a, 62b. The central covering 62c can cover the transverse cornice 66. Each side covering 62a, 62b can cover part of the longitudinal cornice 64, on either side of the transverse cornice 66.

Each covering 62a, 62b, 62c for example comprises foam trim covered with a fabric.

The longitudinal cornice 64, covered with the side coverings 62a, 62b, thus defines, on either side of the protrusion 24, two side support elements for a passenger's body, symmetrical relative to the middle plane P. These side elements can receive a passenger's arm or back by bearing.

The transverse cornice 66, covered with the central covering 62c, is a central support element for a passenger's body. In particular, its side walls define two central support zones for a passenger's body, symmetrical relative to the middle plane, and its upper wall defines a support zone for a passenger's arm.

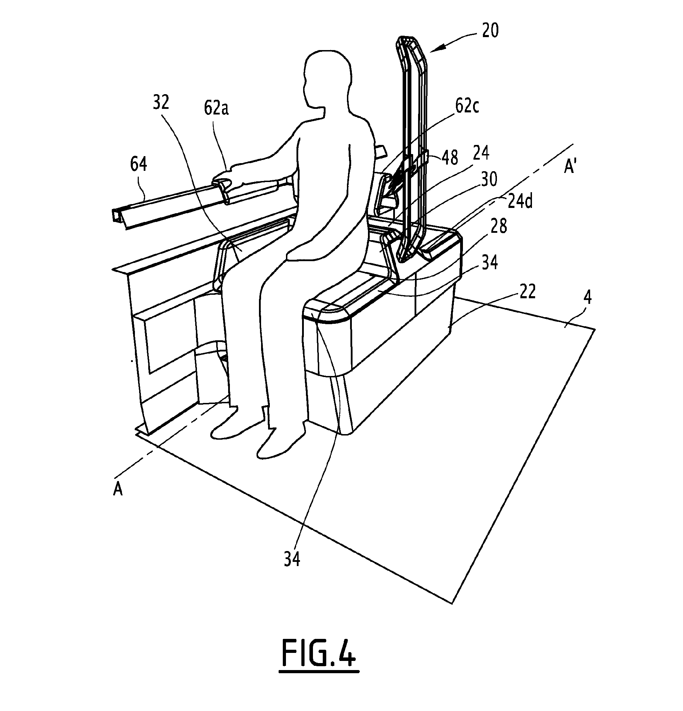

Each seat 12, 12' can receive a seated passenger, in two orthogonal positions, illustrated in Figures 4 and 5.

In a first position, illustrated in Figure 4, the passenger, seated on the seat 12, is oriented along the longitudinal axis A-A' of the vehicle. In that position, the transverse cornice 66 forms the backrest of the seat 12, and the longitudinal cornice 64 is an armrest for said seat 12.

The passenger's buttocks and thighs bear vertically on the seat portion 28 and the backs of his knees rest on a front rim 28d of the seat portion 14. A lower portion of his back bears against the central support element 30 and an upper portion of his back bears against the transverse cornice 66, more specifically against a side wall of said cornice covered with the central covering 62c. Furthermore, his right arm bears on the side covering 62a of the longitudinal cornice 64.

In the second position, illustrated in Figure 5, the passenger is oriented orthogonally to the longitudinal axis A-A'. In this position, the transverse cornice 66 forms an armrest of the seat 12, and the longitudinal cornice forms the backrest of said seat 12.

The passenger's buttocks and thighs bear vertically on the seat portion 28, and the backs of his knees rest on a front rim of the seat portion 14. A lower portion of his back bears against the side support element 32, and an upper portion of his back bears against the side covering 62a of the longitudinal cornice 64. Furthermore, his left arm bears on the transverse cornice 66, more specifically against its upper wall covered with the central covering 62c.

## Claims

1. A retaining device for passenger transport vehicle passengers, of the type comprising a support column (20) intended to allow the vehicle's passengers to stabilize themselves, said column (20) comprising an upper end portion (56), a central portion (54) comprising at least one tubular support bar (54a, 54b), adapted to be grasped by a user, and a lower end portion (58), said central portion (54) of the column comprising at least two tubular support bars (54a, 54b), the upper ends of these support bars (54a, 54b) being connected by the upper end portion (56) of the column (20) and the lower ends of the support bars (54a, 54b) being connected by the lower end portion (58) of the column (20), and the device comprising means for fixing the lower end portion (58) to a seat (12, 12') of the vehicle and means (48) for fixing the central portion (54) of the column (20) to the seat of the vehicle; **characterised in that** said means for fixing said central portion (54) comprises a support member (48) secured to a support structure (46) of a backrest (66,22c) of said seat , said support member (48) comprising a fastening lug (49) for fixing to said support structure (46) and two fastening lugs (50, 52) for fixing to respective support bars (54a, 54b), provided at one end with a support element of said support bar (54a, 54b).

2. The device according to claim 1, **characterized in that** said tubular support bars (54a, 54b) are substantially vertical and parallel to each other.

3. The device according to any one of the preceding claims, **characterized in that** said means for fixing said lower portion comprise means for fixing said lower portion (58) to a support structure (22, 24d) of a seat portion (14) of said seat (12, 12').

4. The device according to claim 3, **characterized in that** said support structure (22) comprises a support surface (24d) for said lower portion (58).

5. The device according to any one of the preceding claims, **characterized in that** said support lug (50, 52) is provided at one end with a through opening comprising an inner surface with a shape combined with an outer surface of said support bar (54a, 54b).

6. The device according to any of the preceding claims, **characterized in that** said support member (48) is secured to a runner (46) orthogonal to a wall (6) of the vehicle, able to support the backrest (66, 62c) of the seat (12, 12').

7. A passenger transport vehicle comprising at least one seat and at least one device according to any one of claims 1 to 6.

## Patentansprüche

1. Haltevorrichtung für Personen-Transportfahrzeuge, vom Typ umfassend eine Haltesäule (20), die dazu vorgesehen ist, den Fahrzeugpassagieren eine Haltemöglichkeit zu geben, welche Säule (20) einen oberen Endbereich (56), einen mittleren Bereich (54) mit zumindest einer rohrförmigen Haltestange (54a,54b), die dazu vorgesehen ist, von einem Benutzer gegriffen zu werden, und einen unteren Endbereich (58) umfasst, welcher mittlere Bereich (54) der Säule zumindest zwei rohrförmige Haltestangen (54a,54b) umfasst, wobei die oberen Enden dieser Haltestangen (54a,54b) mit dem oberen Endbereich (56) der Säule (20) verbunden sind und die unteren Enden der Haltestangen (54a,54b) mit dem unteren Endbereich (58) der Säule (20) verbunden sind, welche Vorrichtung ferner Mittel zur Befestigung des unteren Endbereichs (58) an einem Sitz (12,12') des Fahrzeugs und Mittel (48) zur Befestigung des mittleren Bereichs (54) der Säule (20) am Sitz des Fahrzeugs umfasst, **dadurch gekennzeichnet, dass** die Mittel zur Befestigung des mittleren Bereichs (54) ein Stützelement (48) umfassen, das an einer Stützstruktur (46) einer Rückenlehne (66,22c) des Sitzes befestigt ist, welches eine Befestigungslasche (49) zur Befestigung der Stützstruktur (46) und zwei Befestigungslaschen (50,52) zur Befestigung an jeweiligen Haltestangen (54a,54b) umfasst, die an einem Ende mit einem Stützelement der Haltestange (54a,54b) versehen sind.

2. Vorrichtung gemäß Anspruch 1, **dadurch gekennzeichnet, dass** die rohrförmigen Haltestangen (54a,54b) im wesentlichen vertikal und parallel zueinander stehen.

3. Vorrichtung gemäß einem der vorhergehenden Ansprüche, **dadurch gekennzeichnet, dass** die Mittel zur Befestigung des unteren Bereichs (58) an einer Lagerstruktur (22,24d) des Sitzbereichs (14) des Sitzes (12,12') umfassen.

4. Vorrichtung gemäß Anspruch 3, **dadurch gekennzeichnet, dass** die Lagerstruktur (22) eine Lagerfläche (24d) für den unteren Bereich (58) umfasst.

5. Vorrichtung gemäß einem der vorhergehenden Ansprüche, **dadurch gekennzeichnet, dass** die Haltelasche (50,52) an einem Ende mit einer Durchgangsöffnung versehen ist, die eine innere Oberfläche mit einer Form aufweist, die mit einer Außenfläche der Haltestange (54a,54b) zusammengesetzt ist.

6. Vorrichtung gemäß einem der vorhergehenden Ansprüche, **dadurch gekennzeichnet, dass** das Stützelement (48) an einer Schiene (46) befestigt ist, die senkrecht zu einer Wand (6) des Fahrzeugs steht und die Rückenlehne (66,62c) des Sitzes (12,12') stützen kann.

7. Personen-Transportfahrzeug, umfassend zumindest einen Sitz und zumindest eine Vorrichtung gemäß einem der vorhergehenden Ansprüche 1 bis 6.

## Revendications

1. Dispositif de retenue pour des passagers de véhicule de transport de passagers, du type comprenant une colonne de support (20) destinée à permettre aux passagers du véhicule de se stabiliser, ladite colonne (20) comprenant une portion d'extrémité supérieure (56), une portion centrale (54) comprenant au moins une barre de support tubulaire (54a, 54b), adaptée pour être saisie par un utilisateur, et une portion d'extrémité inférieure (58), ladite portion centrale (54) de la colonne comprenant au moins deux barres de support tubulaire (54a, 54b), les extrémités supérieures de ces barres de support (54a, 54b) étant raccordées par la portion d'extrémité supérieure (56) de la colonne (20) et les extrémités inférieures des barres de support (54a, 54b) étant raccordées par la portion d'extrémité inférieure (58) de la colonne (20), et le dispositif comprenant un moyen de fixation de la portion d'extrémité inférieure (58) à un siège (12, 12') du véhicule et un moyen (48) de fixation de la portion centrale (54) de la colonne (20) au siège du véhicule ; **caractérisé en ce que** ledit moyen de fixation de ladite portion centrale (54) comprend un organe de support (48) assujetti à une structure de support (46) d'un dossier (66, 22c) dudit siège, ledit organe de support (48) comprenant une patte d'assujettissement (49) pour être fixée à ladite structure de support (46) et deux pattes d'assujettissement (50, 52) pour être fixées à des barres de support (54a, 54b) respectives, pourvues à une extrémité d'un élément de support de ladite barre de support (54a, 54b).

2. Dispositif selon la revendication 1, **caractérisé en ce que** lesdites barres de support tubulaire (54a, 54b) sont sensiblement verticales et parallèles les unes aux autres.

3. Dispositif selon l'une quelconque des revendications précédentes, **caractérisé en ce que** ledit moyen de fixation de ladite portion inférieure comprend un moyen pour fixer ladite portion inférieure (58) à une structure de support (22, 24d) d'une portion de siège (14) dudit siège (12, 12').

4. Dispositif selon la revendication 3, **caractérisé en ce que** ladite structure de support (22) comprend une surface de support (24d) pour ladite portion inférieure (58).

5. Dispositif selon l'une quelconque des revendications précédentes, **caractérisé en ce que** ladite patte de support (50, 52) est pourvue à une extrémité d'une ouverture traversante comprenant une surface interne ayant une forme combinée à une surface externe de ladite barre de support (54a, 54b).

6. Dispositif selon l'une quelconque des revendications précédentes, **caractérisé en ce que** ledit organe de support (48) est arrimé à un coulisseau (46) orthogonal à une paroi (6) du véhicule, apte à supporter le dossier (66, 62c) du siège (12, 12').

7. Véhicule de transport de passagers comprenant au moins un siège et au moins un dispositif selon l'une quelconque des revendications 1 à 6.
